Europäisches Patentamt

European Patent Office

Office européen des brevets

(19)

(11) **EP 1 423 921 B1**

(12) **FASCICULE DE BREVET EUROPEEN**

(45) Date de publication et mention
de la délivrance du brevet:
**13.07.2005 Bulletin 2005/28**

(51) Int Cl.⁷: **H04B 1/707**, H04L 25/03,
H04L 25/02, H04L 1/00,
H03M 13/29

(21) Numéro de dépôt: **02779631.7**

(22) Date de dépôt: **09.08.2002**

(86) Numéro de dépôt international:
**PCT/FR2002/002848**

(87) Numéro de publication internationale:
**WO 2003/021805 (13.03.2003 Gazette 2003/11)**

(54) **PROCEDE ET SYSTEME DE RECEPTION ITERATIVE SOUS OPTIMALE POUR SYSTEME DE TRANSMISSION HAUT DEBIT CDMA**

VERFAHREN UND VORRICHTUNG ZUM SUBOPTIMALEN ITERATIVEN EMPFANG FÜR EIN CDMA-SYSTEM MIT HOHER DATENÜBERTRAGUNGSRATE

SUB-OPTIMAL ITERATIVE RECEIVER METHOD AND SYSTEM FOR A HIGH-BIT-RATE CDMA TRANSMISSION SYSTEM

(84) Etats contractants désignés:
**AT BE BG CH CY CZ DE DK EE ES FI FR GB GR IE IT LI LU MC NL PT SE SK TR**

(30) Priorité: **06.09.2001 FR 0111549**

(43) Date de publication de la demande:
**02.06.2004 Bulletin 2004/23**

(73) Titulaire: **FRANCE TELECOM**
**75015 Paris (FR)**

(72) Inventeurs:
• **VISOZ, Raphael**
**F-92130 Issy-les-Moulineaux (FR)**
• **BOUJEMAA, Hatem, SUPCOM**
**2083 EL Ghazala Ariana (TN)**

(74) Mandataire: **de Roquemaurel, Bruno et al**
**Novagraaf Technologies**
**122, rue Edouard Vaillant**
**92593 Levallois Perret Cedex (FR)**

(56) Documents cités:
**US-A- 5 809 086**

• **NAGAYASU T ET AL: "A RECEIVER WITH ITERATIVE SOFT DECISION AND FORWARD ERROR CORRECTION" ELECTRONICS AND COMMUNICATIONS IN JAPAN, SCRIPTA TECHNICA. NEW YORK, US, vol. 83, no. 9, PART 1, septembre 2000 (2000-09), pages 76-85, XP000949745**
• **FRANZ V ET AL: "ITERATIVE CHANNEL ESTIMATION FOR TURBO-DETECTION" ITG FACHBERICHTE, VDE VERLAG, BERLIN, DE, no. 146, mars 1998 (1998-03), pages 149-154, XP000997637 ISSN: 0932-6022**
• **ARIYAVISTAKUL S ET AL: "Joint equalization and interference suppression for high data rate wireless systems" VEHICULAR TECHNOLOGY CONFERENCE, 1999 IEEE 49TH HOUSTON, TX, USA 16-20 MAY 1999, PISCATAWAY, NJ, USA,IEEE, US, 16 mai 1999 (1999-05-16), pages 700-706, XP010341874 ISBN: 0-7803-5565-2**

**Description**

La présente invention concerne un procédé et un système de réception radio haut débit pour recevoir des signaux dans un système radio utilisant la technique CDMA (Code Division Multiple Access).

Elle s'applique notamment, mais non exclusivement aux systèmes de téléphonie mobile haut débit (au moins 2 Mbits/s), tels que les systèmes UMTS (Universal Mobile Telecommunications System) en Europe. Ces systèmes sont conçus pour offrir une large gamme de services ayant des débits et des facteurs d'étalement différents. Ces services incluent un mode de transmission par paquet haut débit en liaison descendante (vers les terminaux mobiles) appelé HSDPA (High Speed Downlink Packet Access), qui est caractérisé par l'abandon du contrôle de puissance en boucle fermée, et une adaptation de lien utilisant des modulations à constellations variables (QPSK, MAQ16, MAQ64) et un faible facteur d'étalement.

Dans les systèmes de téléphonie mobile, l'information est transmise en utilisant une technique d'accès multiples. Certains systèmes utilisent une division en fréquence (FDMA) et temporelle (TDMA), les utilisateurs du réseau étant distingués les uns des autres à la fois sur la base de la fréquence respective utilisée, les informations à transmettre étant réparties dans des tranches de temps attribuées respectivement à chaque utilisateur. Dans les systèmes basés sur une division de codes (CDMA), les utilisateurs communiquent entre eux en utilisant la même bande de fréquences radio. Pour pouvoir distinguer les utilisateurs les uns des autres, un code d'étalement est attribué respectivement à chacun d'entre eux pour toute la durée d'une connexion, ce code servant à étaler en bande de base le spectre du signal à transmettre. Pour reconstituer l'information transmise les récepteurs doivent utiliser le même code pour effectuer l'opération inverse de l'étalement. Comparée aux autres méthodes d'accès multiples, cette technique présente l'avantage d'être plus souple en terme d'accès et de débit que l'on peut faire varier en jouant sur le facteur d'étalement.

Dans les transmissions radio, la forme du milieu entre l'émetteur et le récepteur d'un signal radio interfère avec les transmissions effectuées, et entraîne une propagation suivant des trajets multiples dus aux réflexions qui se produisent en différents points du canal radio (en particulier en milieu urbain). Il en résulte que les composantes d'un même signal transmis arrivent au récepteur avec des puissances et des retards différents.

Pour les récepteurs CDMA, on utilise un récepteur en râteau, appelé récepteur Rake, qui permet de reconstituer le signal transmis à partir des différentes composantes reçues ayant suivi des chemins de propagation différents. Ces récepteurs sont basés sur la reconstitution d'un profil de délais ou modèle équivalent de canal radio. A cet effet, on transmet avec l'information une séquence de symboles pilotes connue des récepteurs, et sur la base de cette connaissance, les récepteurs effectuent une estimation (réponse impulsionnelle représentant l'ensemble des trajets du canal radio) du canal radio par lequel le signal reçu a été transmis. Un filtre adapté est décalé sur le signal reçu, par exemple d'une demi unité de code d'étalement, pendant que la puissance reçue est mesurée. Cette technique permet de construire un graphe de réponse impulsionnelle donnant des informations sur la puissance et les retards dus à la propagation par trajets multiples des composantes du signal reçu par un canal radio donné.

Si la technique CDMA apparaît bien adaptée aux services temps réel à faibles débits, elle semble mal adaptée aux services hauts débits par paquets. En effet, les performances du récepteur Rake reposent sur les propriétés d'interet d'auto-corrélation des séquences d'étalement, et ces propriétés sont d'autant meilleures que la séquence d'étalement est longue et donc que le facteur d'étalement est grand. Or plus le débit augmente, plus le facteur d'étalement diminue. La séquence d'étalement devient plus courte et donc les propriétés d'inter- et d'auto-corrélation des séquences d'étalement se dégradent, conduisant à l'apparition d'interférences entre symboles d'un même signal transmis. Il en résulte que les performances du récepteur Rake s'écroulent pour des facteurs d'étalement inférieurs à 8, en particulier lorsque la modulation utilisée présente un grand nombre d'états.

Une étude de la dégradation des performances du récepteur Rake à cause des interférences entre symboles a montré que l'utilisation d'une technique d'égalisation est nécessaire lorsque le facteur d'étalement est inférieur à 16 (voir [1] "On the Rake receiver performance" H. Boujemaa, M. Siala, VTC 2000 Fall, Boston USA).

Il s'avère donc que les récepteurs de type Rake apparaissent seuls très mal adaptés pour répondre aux besoins de la téléphonie mobile haut débit.

Or la mise en oeuvre de techniques de détection et de décodage optimales s'avère à l'heure actuelle quasi impossible, car elle entraîne une complexité de calcul très importante, en particulier dans le cas où les canaux de transmission présentent une réponse impulsionnelle trop longue comme en milieu urbain.

Par ailleurs, dans la technique TDMA (Time Division Multiple Access), il existe plusieurs techniques de détection et de décodage sous-optimales.
On connaît par exemple la technique utilisant un égaliseur de type LMMSE (Linear Minimum Mean Square Error) permettant de réduire non seulement les interférences entre symboles, mais également les Interférences entre utilisateurs. Pour plus de détails, on peut se référer aux documents :

- [2] "Linear receivers for the DS-CDMA downlink exploiting orthogonality of spreading sequences" de I. Ghauri et D. T. M Slock, dans Proc. 32th Asilomar Conf. on Signals, Systems and Comp., Asilomar, CA, Nov. 1-4 1998, et

- [3] "Interference Suppression in CDMA Downlink through Adaptive Channel Equalization", de M. Heikkilä, P. Komulainen, et J. Lilleberg, dans VTC 99 Fall, Tokyo, Japan.

Il est à noter que dans les liaisons descendantes, les interférences entre utilisateurs sont dues au fait que la propagation dans les canaux s'effectue suivant des trajets multiples, étant donné que les séquences d'étalement entre les différents utilisateurs sont orthogonales. Cette solution s'avère très efficace pour réduire les interférences entre utilisateurs, par comparaison avec les récepteurs de type Rake. Toutefois, cette solution ne permet pas de réduire sensiblement les interférences entre symboles du fait des caractéristiques linéaires de l'égaliseur LMMSE.

On a également proposé de disposer en sortie d'un récepteur Rake, un égaliseur à estimation de la séquence la plus probable (MLSE : Maximum Likelihood Sequence Estimation). Pour plus de détails concernant cette technique, on peut se référer par exemple au document [4] "Joint multipath combining and MLSE equalization (Rake-MLSE Receiver) for WCDMA systems" de S. Tantikovit, et A.U.H. Sheikh, dans VTC 2000 Spring, Tokyo, Japan. Cette solution est optimale du point de vue de la détection de séquence, et proche de la solution optimale sur le plan de la détection d'erreurs sur les symboles transmis. Toutefois, la complexité de cette solution augmente d'une manière exponentielle avec l'étalement des retards dans un même canal et avec la taille de la constellation de la modulation employée. Elle n'est donc pas applicable à tous les services UMTS. En outre, cette solution ne prend pas en compte les dégradations de performances dues à une mauvaise estimation de canal et de codage de canal De plus, elle ne propose pas d'algorithme de sortie souple ou pondérée.

On connaît par ailleurs la technique d'égalisation DDFSE (Delayed Decision Feedback Sequence Estimation) qui consiste à réduire la complexité des états du treillis en utilisant la technique dite de "traitement par survivant" (Per Survivor Processing). Pour plus de détails concernant cette technique, on peut se référer par exemple au document [5] "Delayed Decision-Feedback Sequence Estimation" de A. Duel-Hallen et C. Heegard, dans IEEE Transactions on Communications, vol. 37, pp. 428-436, May 1989. Dans les systèmes TDMA, cette technique présente l'inconvénient d'être sensible à la propagation d'erreurs, ce qui nécessite un préfiltrage. Dans les systèmes CDMA, cette technique apparaît inapplicable étant donné que le modèle équivalent de canal en sortie du récepteur Rake varie à chaque symbole transmis, du fait qu'il dépend du code d'étalement qui change à chaque symbole.

Une méthode de détection et de décodage par itération conçue pour la technique TDMA, appelée "turbo-détection" a également été décrite dans l'article [6] "Iterative Correction of Intersequential Interference: Turbo-equalization" de C. Douillard, M. Jezequel, C. Berrou, A. Picart, P. Didier et A. Glavieux, publié dans European Transactions on Telecommunications, vol. 6, p. 507 à 511, Sept. 1995. Dans cette technique de détection et de décodage, on utilise un égaliseur à maximum de vraisemblance à entrées et sorties pondérées, appelé SISO MLSE, et le processus de décodage est de type Viterbi également à entrées et sorties pondérées, désigné par SOVA. Ce dernier a fait l'objet d'une publication intitulée [7] "A low Complexity Soft Output Viterbi Decoder Architecture", ICC'93 p. 733 à 740, Genève, Suisse, Mai 1993.

Cette technique de détection et de décodage a fait l'objet de développements importants qui ont conduit à la mise en oeuvre de détecteurs optimaux à maximum de probabilité a posteriori (MAP). Pour plus de détails sur ces détecteurs, on peut se reporter aux articles intitulés :

- [8] "Optimal Decoding of Linear Codes for Minimizing Symbol Error Rate" publié par L.R. Bahl, J. Cocke, F. Jelinek et J. Raviv dans IEEE Transactions on Information Theory, vol. IT-20, p. 284-287, Mars 1994 ;
- [9] "Iterative Equalization and Decoding in Mobile Communications Systems", publié par G. Baush, H. Khorram et J. Hagenauer dans Proc. EPMCC'97, p. 307-312, Bonn, Allemagne, Sept. 1997.

Toutefois, cette solution n'a pas été transposée aux systèmes CDMA, et en outre elle introduit une complexité démesurée au niveau du récepteur, de l'ordre de $M^L$, M étant le nombre de points de la constellation de modulation et L le nombre d'échos pris en compte dans le canal de propagation. De plus, elle n'aborde pas le problème de l'estimation de canal.

Enfin, dans la publication [10] "Turbo-Equalization over Frequency Selective Channel" - International Symposium on Turbo-Codes, Brest, France, Sept. 1997, on a également proposé une technique itérative de détection de symboles et de décodage de canal, appelée "turbo-égalisation" substantiellement différente de la technique de turbo-détection précitée, et qui suppose une estimation bruitée du canal de transmission. Toutefois, par rapport à la technique de turbo-détection, cette technique introduit des dégradations de performances, dépendant fortement de la technique d'égalisation employée à la première itération. A ce sujet, on peut se référer à la publication [11] "Joint Equalization and Decoding: Why Choose the Iterative Solution ?" de A. Roumy, I. Figalkow et D. Pirez, dans IEEE VTC'1999 Fall, Amsterdam, Netherlands, Sept. 1999.

Cette technique n'est pas transposable aux systèmes CDMA, car elle repose sur des techniques de filtrage qui ne peuvent pas être appliquées lorsque le canal varie indépendamment d'un symbole transmis à l'autre.

La présente invention a pour but de résoudre ces problèmes en vue de proposer un procédé de réception et une structure de récepteur, relativement simples, présentant des performances proches des performances optimales, tout en utilisant une modulation d'ordre élevé et un facteur d'étalement faible. Cet objectif est atteint par la prévision d'un procédé de réception d'un signal, transmis sur un canal de transmission à trajets multiples, suivant une technique d'étalement de spectre avec un faible facteur d'étalement, ce signal étant transmis sous la forme de séquences de symboles binaires codés comportant des symboles pilotes prédéfinis et des symboles de données, multipliée par une séquence d'étalement, ce procédé comprenant une étape de détermination d'une estimation du canal de transmission à l'aide des symboles pilotes reçus.

Selon l'invention, ce procédé comprend les étapes consistant à :

- reconstituer le signal transmis à l'aide de l'estimation de canal à partir des signaux reçus et transmis par les multiples trajets du canal de transmission,
- déterminer un modèle équivalent de canal tel qu'il est vu à partir du signal reconstitué, à partir de l'estimation de canal,
- réduire les interférences entre les symboles du signal transmis reconstitué, ces interférences résultant d'un facteur d'étalement faible, à l'aide d'un détecteur DDFSE à base de treillis à nombre d'états réduit et utilisant le modèle équivalent de canal, et délivrant en sortie des valeurs estimées des symboles codés reçus,
- désentrelacer les symboles codés, et
- décoder les valeurs estimées des symboles codés et désentrelacés, pour restituer les symboles de données transmis.

Avantageusement, les valeurs estimées des symboles codés reçus, obtenues après réduction d'interférence et après décodage sont des valeurs pondérées ou souples.

Selon une particularité de l'invention, les étapes de réduction des interférences entre symboles et de décodage sont incluses dans un premier processus itératif dans lequel les symboles codés et désentrelacés obtenus à une itération n sont réestimés lors du décodage en fonction des symboles de données obtenus à l'issue du décodage et après correction d'erreurs, la différence entre les symboles codés réestimés obtenus à l'itération n et les symboles codés, désentrelacés, obtenus à la même itération est réentrelacée, puis appliquée en entrée du détecteur DDFSE et retranchée aux symboles codés obtenus à l'itération n+1 en sortie du détecteur DDFSE.

Avantageusement, l'estimation de canal est améliorée par la méthode des moindres carrés (LS).

De préférence, l'estimation de canal est améliorée par l'algorithme de l'erreur quadratique moyenne minimum (MMSE).

Selon une autre particularité de l'invention, l'estimation de canal est effectuée dans un processus itératif dans lequel les symboles codés et désentrelacés obtenus à une itération n sont réestimés lors du décodage, en fonction des symboles de données obtenus à l'issue du décodage et après correction d'erreurs, les symboles codés réestimés étant entrelacés, une estimation de canal étant effectuée sur la base des symboles codés réestimés et entrelacés, un modèle équivalent de canal étant déterminé à partir de l'estimation de canal, l'estimation de canal et le modèle équivalent de canal déterminés à une itération n étant utilisés respectivement pour reconstituer le signal transmis et réduire les interférences entre symboles à l'itération suivante n+1.

L'invention concerne également un système de réception d'un signal, transmis sur un canal de transmission à trajets multiples, suivant une technique d'étalement de spectre avec un faible facteur d'étalement, ce signal étant transmis sous la forme d'une séquence de symboles binaires codés comportant des symboles pilotes prédéfinis et des symboles de données, multipliée par une séquence d'étalement, ce système comprenant un récepteur en râteau pour reconstituer le signal transmis à l'aide d'une estimation de canal, à partir des signaux reçus et transmis par les multiples trajets du canal de transmission, et des moyens d'estimation de canal à partir de symboles pilotes reçus, pour délivrer une estimation du canal de transmission au récepteur en râteau. Selon l'invention ce système comprend en outre :

- des moyens de modélisation de canal pour déterminer un modèle équivalent de canal tel qu'il est vu en sortie du récepteur en râteau, en fonction de l'estimation de canal,
- des moyens de réduction d'interférences entre symboles reçus, comportant un détecteur DDFSE à base de treillis à nombre d'états réduit, pour réduire les interférences entre symboles reçus à l'aide du modèle équivalent de canal, et restituer des valeurs estimées des symboles codés reçus,
- des moyens de désentrelacement pour désentrelacer les valeurs estimées des symboles codés reçus, et
- des moyens de décodage pour décoder les valeurs estimées et désentrelacées et fournir les symboles de données transmis.

Avantageusement, les valeurs estimées et décodées délivrées par les moyens de réduction d'interférences entre symboles et les moyens de décodage sont des valeurs pondérées ou souples.

Selon une particularité de l'invention, ce système comprend en outre :

- des moyens pour réestimer les symboles codés en fonction des symboles de données décodés et après correction d'erreurs,
- des premiers moyens de soustraction pour soustraire aux symboles codés réestimés, les symboles codés estimés et désentrelacés, et obtenir une séquence de symboles codés réestimés extrinsèque,
- des premiers moyens d'entrelacement pour entrelacer la séquence de symboles codés réestimés extrinsèque, et
- des seconds moyens de soustraction pour soustraire de la séquence de symboles reçus et estimés par les moyens de réduction à une itération suivante, la séquence de symboles codés réestimés extrinsèque.

Selon une autre particularité de l'invention, ce système comprend en outre :

- des seconds moyens d'entrelacement pour entrelacer la séquence de symboles codés réestimés en sortie des moyens de décodage,
- des second moyens d'estimation de canal pour fournir une estimation de canal de transmission à partir de la séquence entrelacée de symboles codés réestimés, aux moyens de détermination d'un modèle équivalent de canal et au récepteur en râteau.

Un mode de réalisation préféré de l'invention sera décrit ci-après, à titre d'exemple non limitatif, avec référence aux dessins annexés dans lesquels

La figure 1 représente schématiquement un émetteur classique conçu pour émettre des signaux selon la technique CDMA ;

La figure 2 représente schématiquement un système de réception selon l'invention ;

Les figures 3 et 4 représentent schématiquement deux variantes préférées du système de réception montré sur la figure 2.

Les figures 5 et 6 illustrent sous la forme de courbes de taux d'erreur de bit en fonction du rapport signal sur bruit, les performances des récepteurs représentés sur les figures 2 à 4 ;

La figure 7 représente schématiquement un mode de réalisation d'un estimateur de canal selon l'invention.

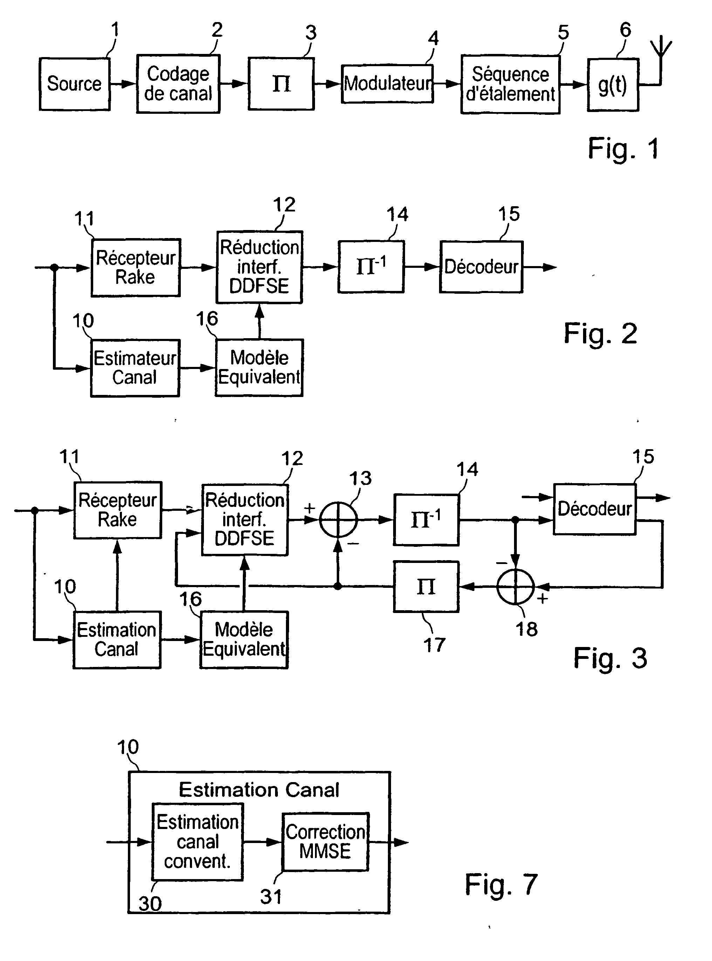

La figure 1 représente un émetteur CDMA selon l'art antérieur, un tel émetteur comprenant une source 1 de signaux fournissant des séquences de symboles binaires notées

$$u_l^{\tau_0} = \{u_l, ..., u_{\tau_0}\}^T$$

de $\tau_0$ symboles, un encodeur de canal 2 qui délivre une séquence codée notée

$$c_l^{\tau_0} = \{c_l, ..., c_{\tau_0}\}^T.$$

Chaque symbole de donnée

$$u_n = \{u_{n,l}, ..., u_{n,k_0})^T$$

contient $k_0$ bits, tandis que chaque symbole

$$c_n = \{c_{n,l}, ..., c_{n,n_0}\}^T$$

contient $n_0$ bits. Les bits codés sont entrelacés par un entrelaceur 3 et complétés pour correspondre à un format de transmission prédéterminé, c'est-à-dire des trames de longueur $\tau$ incluant des symboles pilotes pour permettre au récepteur d'effectuer une estimation de canal. Les bits résultants sont groupés en symboles de type $\mathbf{a_k} = (a_{k,l}, ..., a_{k,q})$ contenant q bits avant d'être appliqués à un modulateur 4 de type M-PSK (Phase-Shift Keying) d'ordre M, MAQ16 ou MAQ64, qui délivre un symbole modulé correspondant s(k).

Ensuite, le signal s(k) est multiplié en 5 à une séquence d'étalement prédéfinie c(q) pour la transmission en question, le signal résultant traversant un filtre 6 de type en racine carrée de cosinus surélevé également appelé en racine de Nyquist, avec un facteur d'occupation spectrale (ou roll-off) de 0,22.

Sur la figure 2, le récepteur selon l'invention comprend un récepteur 11 en râteau de type Rake qui utilise une estimation de canal fournie par un estimateur de canal 10, le récepteur Rake étant suivi d'un dispositif de réduction d'interférences entre symboles 12, auquel est appliqué un modèle équivalent 16 du canal de transmission. La sortie du dispositif de réduction d'interférences 12 est connectée à un décodeur 15, par l'intermédiaire d'un désentrelaceur 14 effectuant l'opération inverse de l'entrelacement 3. Par ailleurs, l'estimation de canal fournie par l'estimateur 10 est appliquée au modèle de canal 16 pour déterminer un modèle équivalent de canal.

Selon l'invention, le dispositif 12 de réduction d'interférences entre symboles est du type DDFSE (Delayed Decision Feed-back Sequence Estimation) à entrée et sortie pondérées, c'est-à-dire de la forme d'un logarithme ln[p(1)/p(0)] du rapport de probabilités p(1) et p(0) que le signal soit respectivement au niveau logique 1 et 0. De même, le décodeur 15 présente également des entrées et sorties pondérées.

Dans le cas d'une propagation multi-trajets, le signal reçu à l'entrée du récepteur à étalement de spectre au temps t présente la forme suivante :

$$r(t) = \sum_{l=1}^{L} h_l(t) \sum_{k} s(k) \, e_k(t - kT_s - \tau_l(t)) + w(t) \qquad (1)$$

dans laquelle

$$e_k(t) = \sum_{q=0}^{N-1} e(kN + q) \, g(t - qT_c)$$

est la forme d'onde pour le symbole modulé s(k), e(q) est la séquence d'étalement, N est le facteur d'étalement, g(t) est la fonction de transfert du filtre en racine de Nyquist 6, $T_e$ et $T_s$ sont respectivement les périodes dite "chip" et de symbole, L est le nombre de trajets dans le canal, $h_l(t)$ et $\tau_l(t)$ sont respectivement l'amplitude complexe et le retard du 1-lème trajet, et $\omega(t)$ est le bruit blanc gaussien avec une densité spectrale de puissance $N_0$.

Si d(i) est le résultat du produit des symboles transmis par la séquence d'étalement,

$$c(i)s\left(\left\lfloor \frac{i}{n} \right\rfloor\right),$$

$\lfloor \ \rfloor$ représentant la fonction "partie entière".

Le signal reçu peut également être écrit de la manière suivante :

$$r(t) = \sum_{i} d(i)h^i(t - iT_c) \qquad (2)$$

dans laquelle :

$$h^i(t) = \sum_{l=1}^{L} h_l(t + iT_c)g(t - \tau_l(t + iT_c)) \qquad (3)$$

Conformément au théorème de Nyquist, le signal reçu r(t) est échantillonné à deux fois la fréquence de chip pour obtenir un vecteur r(i) des échantillons empilés, qui est utilisé pour estimer le symbole de chip i.

Le vecteur r(i) présente la forme suivante :

$$\mathbf{r(i)} = \begin{pmatrix} r((i - M_1)T_c) \\ r((i - M_1)T_c + T_c/2) \\ \vdots \\ r((i + M_2)T_c) \end{pmatrix} = \mathbf{H(i)d(i)} + \mathbf{w(i)} \qquad (4)$$

dans laquelle $M_1$ et $M_2$ représentent la longueur de $h^i(t)$ en multiple de $T_e$,

$$H(i) = [h^{M_1+M_2}(i), \cdots, h^0(i), h_1(i), \cdots, h_{M_1+M_2}(i)] \qquad (5)$$

$$h^j(i) = [h^i((j - M_1)T_c), h^i((j - M_1)T_c + T_c/2), \cdots$$
$$\cdots, h^i(M_2 T_c), 0_{1,2j}]^T, 0 \leq j \leq M_1 + M_2, \qquad (6)$$

$$h_j(i) = [0_{1,2j}, h^i(-M_1 T_c), h^i(-M_1 T_c + T_c/2), \cdots$$
$$\cdots, h^i((M_2 - j)T_c)]^T, 0 \leq j \leq M_1 + M_2, \qquad (7)$$

$$d(i) = [d(i - M_1 - M_2), \ldots, d(i), \cdots, d(i + M_1 + M_2)]^T \qquad (8)$$

Le signal réduit (après opération inverse de l'étalement) sur la branche j (trajet j du canal de transmission) et pour le symbole k peut être écrit de la manière suivante :

$$z_k(\tau_j) = s_k h_j + \sum_{i \neq j} h_i \sum_{n=kN}^{(k+1)N-1} e_n^* d_{n+\tau_{ji}} + w_k(\tau_j) \qquad (9)$$

dans laquelle $d_k$ est le produit de la séquence d'étalement par les symboles transmis et $\tau_{ji} = (\tau_j - \tau_i)/T_c$.
A partir des résultats du document [1], on peut facilement montrer que la sortie $\hat{o}_k$ du récepteur Rake 11 peut être représentée de la manière suivante :

$$\widehat{o}_k = \sum_{j=1}^{L} h_j^* z_k(\tau_j) = \sum_{l=-L'}^{L'} g_l(k) s_{k-l} + w_k \qquad (10)$$

dans laquelle :

$$w_k = \sum_{j=1}^{L} h_j^* w_k(\tau_j) \qquad (11)$$

$g_l(k)$ est la 1-ième amplitude du modèle équivalent en sortie du récepteur Rake 11, $(2L'+1)$ est le nombre d'échos du modèle équivalent 16.

Si l'on suppose que les retards de trajet sont espacés d'un multiple de la période de chip $T_c$, les paramètres du modèle équivalent 16 sont donnés par les formules suivantes :

$$L' = 1 + \max\left\{\left[\frac{i}{n}\right]\right\} \qquad (12)$$

$$g_0(k) = \sum_{j=1}^{L} |h_j|^2 + \sum_{-1 < \frac{\tau_{ji}}{N} < 1} h_j^* h_i \sum_{n=\varepsilon_{ij}^-(k)}^{\varepsilon_{ij}^+(k)} e_n^* e_{n+\tau_{ji}} \qquad (13)$$

$$g_l(k) = \sum_{l-1 < \frac{\tau_{ji}}{N} < l} h_j^* h_i \sum_{n=kN}^{kN - \tau_{ji} - 1 - (l-1)N} e_n^* e_{n+\tau_{ji}}$$

$$+ \sum_{l < \frac{\tau_{ji}}{N} < l+1} h_j^* h_i \sum_{n=kN - \tau_{ji} - lN}^{(k+1)N - 1} e_n^* e_{n+\tau_{ji}}, \quad \forall 1 \le l \le L, \qquad (14)$$

$$g_{-l}(k) = \sum_{-l \le \frac{\tau_{ji}}{N} < -(l-1)} h_j^* h_i \sum_{n=(k+1)N - \tau_{ji} + (l-1)N}^{(k+1)N - 1} e_n^* e_{n+\tau_{ji}}$$

$$+ \sum_{-l-1 < \frac{\tau_{ji}}{N} < -l} h_j^* h_i \sum_{n=kN}^{(k+1)N - \tau_{ji} + lN} e_n^* e_{n+\tau_{ji}}, \quad \forall 1 \le l \le L, \qquad (15)$$

$$\varepsilon_{ij}^-(k) = max\ (kN - \tau_{ji},\ kN) \qquad (16)$$

et

$$\varepsilon_{ij}^+(k) = min\ ((k+1)N - \tau_{ji},\ (k+1)N) \qquad (17)$$

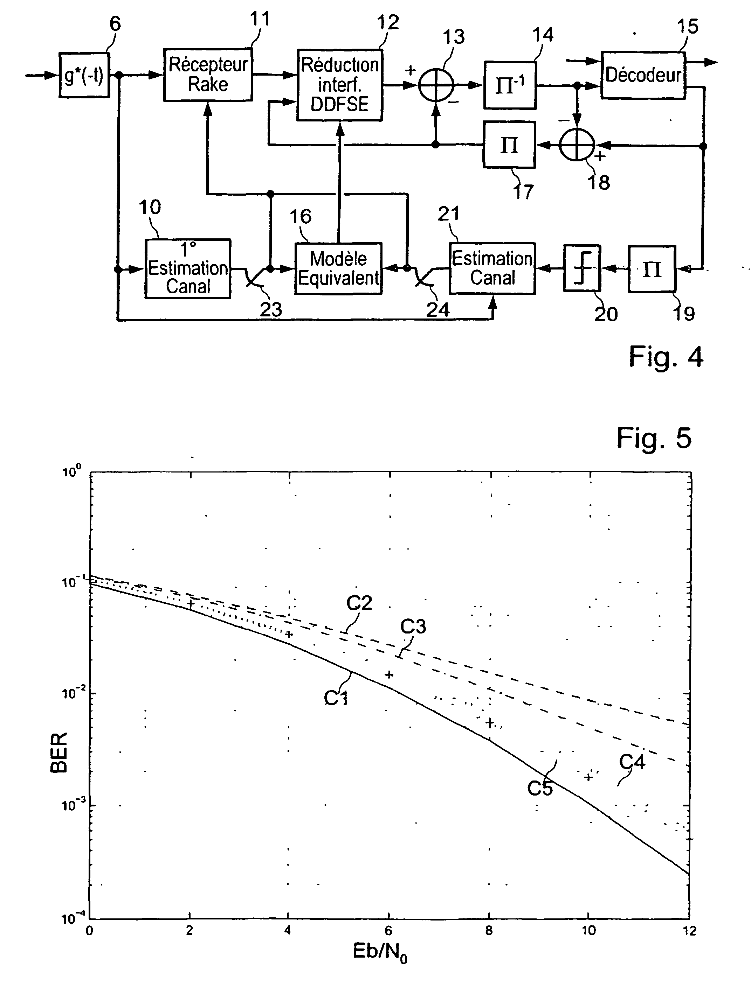

Les courbes représentées sur la figure 5 donnent le taux d'erreur binaire BER en fonction du rapport signal sur bruit $Eb/N_0$, dans le cas idéal (courbe C1) et en sortie du récepteur Rake (courbe C2).

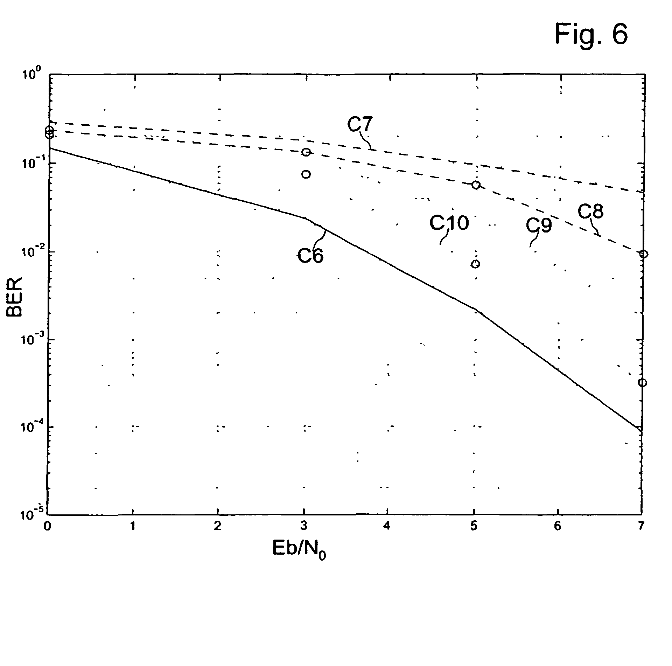

Ces courbes de même que celles de la figure 6, ont été obtenues par simulation avec un facteur d'étalement de 4, un canal de transmission EQ-4 avec quatre trajets dont les retards sont séparés respectivement d'une période chip, chaque trajet présentant une forme gaussienne complexe circulaire ou présentant une atténuation de Rayleigh. Le code de sortie est un code systématique récursif à 16 états, de rapport 1/2 et de polynômes de génération

$$\left(1, \frac{1+D^3+D^4}{1+D+D^4}\right)$$

générant une séquence préencodée c qui est envoyée à un entrelaceur pseudo-aléatoire et divisé en trames.
La comparaison des courbes C1 et C2 montre que les performances d'un tel récepteur sont très mauvaises.

Si comme cela est préconisé dans les références [2] et [3], on dispose un égaliseur LMMSE en amont du récepteur Rake, pour réduire la dégradation due aux interférences entre symboles résultant d'un facteur d'étalement faible, l'estimation du i-ième symbole de chip est de la forme suivante :

$$\overset{\wedge}{d}(i) = h^0(i)^H \left( H(i)H(i)^H + \frac{N_0}{2\sigma_d^2}I_{2(M_1+M_2)+1} \right)^{-1} r(i) \tag{18}$$

dans laquelle $\sigma^2{}_d$ est la variance de la séquence de chip.

La courbe C3 sur la figure 5 qui illustre les performances obtenues avec un tel égaliseur, montre que cette solution ne permet pas d'améliorer sensiblement les performances du récepteur Rake.

Pour améliorer sensiblement les performances du récepteur Rake 11 selon l'invention, on dispose en sortie de celui-ci, un dispositif 12 de réduction d'interférences entre symboles conçu autour d'un détecteur DDFSE sous-optimal basé sur un treillis à nombre d'états réduit, un tel détecteur utilisant un modèle équivalent de canal 16.

Avant d'être appliqués au détecteur DDFSE, les échantillons sont retardés de manière à rendre causal le modèle équivalent de canal 16. Ils peuvent alors être représentés par la formule suivante :

$$y_k = z^{-L'}\widehat{o}_k = \sum_{l=0}^{2L'} \underline{h}_l(k)s_{k-l} + w_k \tag{19}$$

dans laquelle le vecteur $\underline{h}_l(k) = g_{l-L}(k)$, ce vecteur représentant le vecteur des coefficients de canal $[\underline{h}_0(k), ..., \underline{h}_{2L}(k)]^T$.

Ensuite, le détecteur DDFSE travaille sur un treillis à nombre d'états réduit (voir document [8]), par rapport à la technique BCJR qui applique un critère MAP (à maximum de probabilité a posteriori) à un treillis complet à $Q^{2L'}$ états, Q étant le nombre de points de la constellation de modulation PSK, et ($2L'+1$) étant le nombre de trajets du modèle équivalent 16.

Un tel treillis est en fait une machine à états finis, étalés dans le temps et dont les transitions entre états ne dépendent que de l'état précédent, le nombre d'états à chaque instant étant constant. Dans un tel treillis, une section représente l'ensemble des transitions entre les états correspondants à deux instants successifs.

Dans le détecteur DDFSE, le treillis est ainsi réduit à un nombre d'états $Q^\upsilon$ , $\upsilon_r$ étant un nombre entier positif appelé mémoire réduite et choisi tel que $\upsilon_r < 2L'$ dans le cas du détecteur DDFSE.
On dit généralement qu'une séquence d'entrée $a^n{}_1$ de treillis se termine par un sous-état s si $a^n{}_1$ se termine par la sous-chaîne $s=a^n{}_{n-\upsilon,+1}$. A une profondeur n, l'espace des sous-états $S_n$ coïncide avec l'espace complet $S_n$ des états du treillis BCJR si $\upsilon_r = 2L'$. Si $\upsilon_r < 2L'$, $S_n$ est réduit à un sous-ensemble comprenant tous les sous-états possibles s dérivés de tous les états :

$$\left|S_n\right| = Q^{\upsilon_r}, \forall n \in [0,\tau] \text{ et } \left|B_n\right| = Q^{\upsilon,+1}, \forall n \in [1,\tau] \tag{20}$$

La notation employée dans ces relations s'applique à la définition d'un sous-treillis $T(S, B)$ sur lequel s'applique l'algorithme DDFSE.

Dans chaque section et pour toutes les transitions, le calcul de métrique de branche implique une convolution de la réponse impulsionnelle en temps discret du canal à la séquence de $2L'+1$ symboles déjà estimés. Seuls les premiers $\upsilon_r+1$ symboles estimés pour cette séquence étant disponibles sur la transition en cours de traitement et sur le sous-état de sous-treillis de départ avec lequel elle est connectée.
A chaque indice temporel $n \in [1,\tau]$ et pour tous les indices de bit $j \in [1,q]$, l'algorithme optimal symbole par symbole BCJR fourni les logarithmes des rapports de probabilité a posteriori, selon la formule suivante :

$$\lambda\left(\mathbf{a}_{n,j}\right) = \ln \frac{\Pr\left(\mathbf{a}_{n,j} = 1 \,\middle|\, y_1^\tau, \widehat{\underline{\mathbf{h}}}(n)\right)}{\Pr\left(\mathbf{a}_{n,j} = 0 \,\middle|\, y_1^\tau, \widehat{\underline{\mathbf{h}}}(n)\right)} \tag{21}$$

dans laquelle $\widehat{h}$ est une estimation (ou ré-estimation) du vecteur transverse des coefficients de canal (si possible converti à phase minimale), et $y^\tau_1$ est une séquence observée de longueur $\tau$. Dans la dérivée qui suit, le conditionnement par $h$ est implicite et omis pour simplifier les expressions.

Si l'on effectue une marginalisation sur les séquences de symboles d'entrée à bits marqués, l'équation (21) peut être réécrite de la manière suivante :

$$\lambda(a_{n,j}) = \ln \frac{\sum_{r\, a_{j,}^\tau a_{n,j} = 1} p(a_1^\tau, y_1^\tau)}{\sum_{a_1^\tau,\, a_{n,j} = 0} p(a_1^\tau, y_1^\tau)} \tag{22}$$

dans laquelle $p(a^\tau_1, y^\tau_1) = \Pr(y^\tau_1 = y^\tau_1 | a^\tau_1)\, \Pr(a^\tau_1 = a^\tau_1)$.

En faisant l'approximation suivante appelée Min-Log-BCJR :

$$-\ln\left(\sum_k \exp\left(-\Delta_k\right)\right) \simeq \min_k \Delta_k \tag{23}$$

avec $\Delta_k$ représentant des quantités non négatives, le logarithme du rapport de probabilité a posteriori $\lambda(a_{n,j})$ peut être évalué à l'aide de la formule suivante :

$$\lambda\left(\mathbf{a}_{n,j}\right) \simeq \min_{a_1^\tau, a_{n,j} = 0}\left\{-\ln p\left(a_1^\tau, y_1^\tau\right)\right\} - \min_{a_1^\tau, a_{n,j} = 1}\left\{-\ln p\left(a_1^\tau, y_1^\tau\right)\right\} \tag{24}$$

dans laquelle

$$\left\{-\ln p(a_1^\tau, y_1^\tau)\right\}$$

représente le coût métrique, correspondant au bruit, du chemin dans le treillis, associé à la séquence d'entrée $a^n_1$ et à la séquence reçue $y^n_1$. Du fait de la réduction du treillis, le dispositif DDFSE 12 évalue la quantité

$$\left\{-\ln p(a_1^\tau, y_1^\tau)\right\}$$

d'une manière sous-optimale sur la base de l'algorithme PSP dit "par survivant" consistant à sélectionner un seul survivant par noeud. Pour un sous-treillis $T(S,B)$ donné et une branche métrique particulière, on note $\mu^{\leftrightarrow}_n(b)$ le coût métrique du meilleur chemin commençant au sous-état 0 à la profondeur 0, et se terminant au sous-état 0 à la profondeur $\tau$ (si l'on prend en compte les symboles de queue de la séquence), et passant par la branche $b \in B_n$ de la section n. On suppose également que chaque branche $b \in B_n$ contient trois champs, un champ sous-état de départ $b^- \in S_{n-1}$, un champ sous-état d'arrivée $b^+ \in S_n$ et un champ libellé $b^\triangledown = \{b^\triangledown_1, ..., b^\triangledown_q\}$, modélisant un symbole d'entrée à label de bit pour le code d'interférence entre symboles convolutionnel de taux 1 variant en fonction du temps à l'instant n. La sortie du dispositif DDFSE 12 peut être représentée de la manière suivante :

$$\lambda'\left(a_{n,j}\right) = \min_{b \in B_n, b_j^{\triangledown} = 0} \mu_n^{\leftrightarrow}(b) - \min_{b \in B_n, b_j^{\triangledown} = 1} \mu_n^{\leftrightarrow}(b) \qquad (25)$$

Le coût métrique $\mu^{\leftrightarrow}_n(b)$ considéré dans la formule précédente peut toujours être décomposé en une somme de trois termes :

$$\mu_n^{\leftrightarrow}(b) = \mu_{n-1}^{\rightarrow}(b^-) + \zeta_n(b) + \mu_n^{\leftarrow}(b^+) \qquad (26)$$

dans laquelle $\mu^{\rightarrow}_n(s)$ représentant la métrique accumulée vers l'avant du meilleur sous-chemin partant du sous-état $0 \in S_0$, et se terminant au sous-état $s \in S_n$, est calculé de manière récursive à l'aide de la formule suivante :

$$\mu_n^{\rightarrow}(s) = \min_{b \in B_{n-1}, b^+ = s} \left\{ \mu_{n-1}^{\rightarrow}\left(b^-\right) + \xi_n(b) \right\} \qquad (27)$$

avec les conditions limites suivantes :

$$\mu_0^{\rightarrow}(0) = 0 \text{ et } \mu_0^{\rightarrow}(s) = \infty, \forall s \neq 0 \qquad (28)$$

et dans laquelle $\mu^{\leftarrow}_n(s)$ représentant la métrique accumulée vers l'arrière du meilleur sous-chemin partant du sous-état $s \in S_n$, et se terminant au sous-état $0 \in S_\tau$, est calculé de manière récursive à l'aide de la formule suivante :

$$\mu_n^{\leftarrow}(s) = \min_{b \in B_{n+1}, b^- = s} \left\{ \mu_{n+1}^{\leftarrow}\left(b^+\right) + \xi_{n+1}(b) \right\} \qquad (29)$$

avec les conditions limites suivantes :

$$\mu_\tau^{\rightarrow}(0) = 0 \text{ et } \mu_\tau^{\rightarrow}(s) = \infty, \forall s \neq 0 \qquad (30)$$

La métrique de branche $\xi_n(b)$ basée sur l'algorithme PSP et utilisée par le dispositif DDFSE 12 est exprimée de la manière suivante :

$$\xi_n(b) = \frac{1}{2\sigma^2} \left\| y_n - \widehat{\underline{h}}_0(n)s_n - \sum_{k=1}^{\nu_r} \widehat{\underline{h}}_k(n)s_{n-k} - \sum_{k=\nu_r+1}^{2L'} \widehat{\underline{h}}_k(n)\widehat{s}_{n-k} \right\|^2 \qquad (31)$$

Dans cette équation, le symbole complexe $s_n$ pénétrant dans le code d'interférence entre symboles au temps n résulte de la simple redéfinition du libellé de branche $b^{\triangledown}$. La séquence complexe de symboles $\{s_{n-\upsilon_r},...,s_{n-1}\}$ est déduite simplement du sous-état $b^-$, tandis que la séquence estimée de symboles $\{s_{n-2L'},...,s_{n-\upsilon_r-1}\}$ est obtenue en parcourant en arrière le chemin "survivant" qui se termine en $b^-$ et en redéfinissant les libellés des branches le constituant. Les chemins "survivants" sont supposés être mémorisés dans une matrice glissante de remontée (traceback) de profondeur $2L'$.

La courbe C4 sur la figure 5 qui illustre les performances de cette solution a été obtenue avec une complexité de treillis réduit DDFSE de quatre états ($\upsilon_r = 1$). Cette courbe montre que même avec un facteur d'entrelacement faible (= 4), et un réduction importante de du nombre d'états du treillis, cette solution permet de se rapprocher sensiblement de la solution idéale, et en particulier de la solution illustrée par la courbe C5, qui met en oeuvre une estimation de canal de type MLSE (Maximum Likelihood Sequence Estimation) qui est inapplicable à la technique CDMA du fait de sa complexité.

Pour améliorer davantage les performances d'un tel récepteur, l'invention propose comme représenté sur la figure 3, de relier la sortie du dispositif 12 à l'entrée positive d'un comparateur 13 dont la sortie est connectée au désentrelaceur 14. La sortie du désentrelaceur 14 est connectée à une entrée recevant le logarithme de rapport de probabilité intrinsèque des bits codés du décodeur 15 qui fournit sur une première sortie le logarithme de rapports de probabilité a posteriori sur les bits de données transmis, et sur une seconde sortie le logarithme du rapport de probabilité a posteriori sur les bits codés qui est déterminé par une opération inverse au décodage portant sur les bits de données décodés après correction d'erreurs. La seconde sortie du décodeur 15 est rebouclée via un comparateur 18 et un entrelaceur 17 sur l'entrée négative du comparateur 13 et sur une entrée du dispositif DDFSE 12. Par ailleurs, la sortie du désentrelaceur 14 est appliquée également sur l'entrée négative du comparateur 18.

Le code de canal peut être décodé grâce au décodeur 15 de manière optimale en utilisant l'algorithme BCJR. Le dispositif 12 de réduction d'interférences délivre des rapports de probabilité a posteriori sur la valeur des bits $a_{n,j}$ des symboles $a_n$ constituant la séquence $a^\tau_1$, à l'aide des logarithmes des rapports de probabilité a priori de ceux-ci provenant du décodeur (χalant 0 à la première itération) et en tenant compte de la séquence reçue $y^\tau_1$ et d'une valeur estimée (ou réévaluée) ($hn$) du vecteur (équivalent) des coefficients de canal à l'instant n. Les rapports de probabilité a posteriori approximés sur les bits $\lambda'(a_{n,j})$ peuvent être divisés en deux parties selon la formule suivante :

$$\lambda'(a_{n,j}) = \lambda_a(a_{n,j}) + \lambda_e(a_{n,j}) \qquad (32)$$

Après désentrelacement par le désentrelaceur 14, la séquence complète de logarithmes de rapports de probabilité extrinsèque devient une séquence de logarithmes de rapports de probabilité intrinsèque portant sur les bits des symboles codés, qui est appliquée au décodeur 15. D'une manière analogue, à la sortie du décodeur 15, chaque logarithme de rapport de probabilité a posteriori portant sur le bit codé $\lambda(c_{n,j})$ peut être décomposé en une partie a priori et une partie extrinsèque. Cette dernière peut être calculée en soustrayant bit à bit dans le comparateur 18, le logarithme du rapport a priori $\lambda_a(c_{n,j})$ à la sortie du décodeur, du logarithme correspondant du rapport a posteriori $\lambda(c_{n,j})$ :

$$\lambda_e(c_{n,j}) = \lambda(c_{n,j}) - \lambda_a(c_{n,j}) \qquad (33)$$

La séquence de logarithmes de rapports de probabilité extrinsèque portant sur les bits codés, en sortie du décodeur 15 est ré-entrelacée par l'entrelaceur 17 et renvoyée vers le décodeur 15 à la suite de la détection suivante de N séquences de logarithmes de rapport de probabilité a priori portant sur les bits de symboles. En répétant cette procédure un certain nombre de fois, on obtient une augmentation importante du rapport signal sur bruit au niveau des bits de donnée des séquences reçues.

Du fait de sa structure Viterbi très régulière, et de ses bonnes performances au regard de sa complexité modérée, le détecteur DDFSE dont est muni le dispositif 12 apparaît parfaitement adapté à la turbo-détection telle qu'elle est effectuée dans le récepteur représenté sur la figure 3.

Pour la première itération, le fonctionnement du système représenté sur la figure 3 est identique à celui qui a été décrit en référence à la figure 2. A la seconde itération et aux suivantes, l'équation (31) donnant la métrique de branche $\xi_n(b)$ utilisée par le dispositif DDFSE 12 présente un terme de plus :

$$\xi_n(b) = \frac{1}{2\sigma^2} \left\| y_n - \widehat{\underline{h}}_0(n)s_n - \sum_{k=1}^{\nu_r} \widehat{\underline{h}}_k(n)s_{n-k} - \sum_{k=\nu_r+1}^{2L'} \widehat{\underline{h}}_k(n)\widehat{s}_{n-k} \right\|^2 - \ln \Pr(\mathbf{b} = b) \qquad (34)$$

Elle est calculée une seule fois durant le traitement récursif vers l'avant, puis mémorisée.

Le logarithme de la probabilité a priori ln Pr(b=b) sur la branche b $\in B_n$ dans l'équation (31) correspond exactement au logarithme de la probabilité a priori du libellé $b^\triangledown$ qu'elle porte, si bien que :

$$\ln \Pr(\mathbf{b} = b) = \ln \Pr(b^\blacktriangledown = b^\blacktriangledown) = \ln \Pr(a_n = b^\blacktriangledown) \qquad (35)$$

Si l'on suppose une décorrélation parfaite entre les logarithmes des probabilités à priori sur les bits de symbole $a_{n,j}$ après réentrelacement de la séquence de logarithmes de rapport de probabilités extrinsèques provenant du code $C_0$, on obtient :

$$\ln \Pr \left(\mathbf{b} = b^{\triangledown}\right) = \sum_{j=1}^{q} \ln \Pr \left(\mathbf{b}_j^{\triangledown} = b_j^{\triangledown}\right) = \sum_{j=1}^{q} \ln \Pr \left(\mathbf{a}_{n,J} = b_j^{\triangledown}\right) \qquad (36)$$

Finalement, en utilisant les équations (25) et (36), la sortie $\lambda'(a_{n,J})$ du dispositif DDFSE 12 appliquée au symbole $a_{n,j}$ peut être décomposée en une somme de deux termes logarithmiques.

$$\lambda'(a_{n,j}) = \lambda_a(a_{n,j}) + \lambda'_e(a_{n,j}) \qquad (37)$$

où :

$$\lambda_a(a_{n,j}) = \ln \frac{\Pr(a_{n,j} = 1)}{\Pr(a_{n,j} = 0)} \qquad (38)$$

représente le logarithme du rapport a priori portant sur le bit $a_{n,j}$ fourni par le décodeur 15, et où :

$$\lambda'_e \left(\mathbf{a}_{n,J}\right) = \min_{b \in B_n, b_j^{\triangledown}=0} \left\{ \mu_{n-1}^{\rightarrow} \left(b^-\right) + \xi_n^{e,J} \left(b\right) + \mu_n^{\leftarrow} \left(b^+\right) \right\}$$
$$- \min_{b \in B_n, b_j^{\triangledown}=1} \left\{ \mu_{n-1}^{\rightarrow} \left(b^-\right) + \xi_n^{e,J} \left(b\right) + \mu_n^{\leftarrow} \left(b^+\right) \right\} \qquad (39)$$

avec :

$$\xi_n^{e,J}(b) = \frac{1}{2\sigma^2} \left\| y_n - \widehat{h}_0(n)s_n - \sum_{k=1}^{\nu_r} \widehat{h}_k(n)s_{n-k} - \sum_{k=\nu_r+1}^{2L'} \widehat{h}_k(n)\widehat{s}_{n-k} \right\|^2 - \sum_{\ell \neq J} \ln \Pr \left(\mathbf{a}_{n,\ell} = b_\ell^{\triangledown}\right) \quad (40)$$

le second terme de cette équation représentant le logarithme du rapport de probabilité extrinsèque sur le bit $a_{n,j}$ apportée par tous les autres bits des symboles à libellés de bit de la séquence $a_1^\tau$ tout au long du processus de décodage. Il convient d'insister sur le fait que dans le cas où $\upsilon_r = 2L'$, l'algorithme effectué par le dispositif DDFSE 12, devient formellement équivalent à un algorithme de type Min-Log-BCJR appliqué sur la totalité du treillis de canal. Si le traitement ne portait que sur un treillis à états réduits, les séquences estimées obtenues à partir de l'historique des chemins et impliquées dans les dérivées des métriques de branche, introduisent une dégradation de performance, due à un possible effet de propagation d'erreur. Toutefois, il apparaît que les canaux équivalents à la sortie du récepteur Rake 11 n'introduisent pas de propagation d'erreur significative dans la structure du dispositif de réduction DDFSE 12. Il en résulte que le choix de $\upsilon_r = 1$ est suffisant dans la plupart des cas.

Il s'avère que les performances des estimations de canal conventionnelles qui sont obtenues par des traitements de corrélation et de calcul de moyenne, appliqués à une séquence de symboles pilotes, se dégradent avec des facteurs d'étalement faibles du fait des interférences entre symboles.

Pour illustrer ce fait, la figure 6 montre des courbes de taux d'erreur binaire en fonction du rapport signal sur bruit en sortie du décodeur 15, obtenues avec différentes solutions. Sur cette figure, la courbe C6 correspond au cas idéal. La courbe C7 qui correspond au cas où l'on utilise une estimation de canal conventionnelle, montre que cette solution présente des performances relativement mauvaises, assez éloignées du cas idéal.

La présente invention propose d'améliorer la qualité de l'estimation de canal réalisée dans les systèmes représentés sur les figures 2 à 4, en utilisant la connaissance de la structure des interférences entre symboles. A cet effet, on utilise l'estimateur de canal 10 représenté sur la figure 7. Cet estimateur de canal comprend un estimateur de canal conventionnel 30 dont la sortie est reliée à un correcteur 31 d'estimation de canal utilisant la méthode MMSE (méthode de l'erreur quadratique moyenne minimum) ou LS (méthode des moindres carrés), délivrant une estimation de canal qui est utilisée par le dispositif 12 et par le dispositif 16 de modélisation de canal.

Un exemple d'estimateur de canal conventionnel est par exemple décrit dans la référence [1].

Si l'on suppose que les retards de chemins sont espacés d'un multiple de la période de chip $T_c$ et que l'étalement des délais est inférieur à la période de symbole $T_s$, les estimations de canal conventionnelles sont obtenues par la formule suivante :

$$\hat{h} = (\hat{h}_1, \cdots, \hat{h}_L)^T = Mh + n \tag{41}$$

dans laquelle :

$$M = [M_{ji}]_{0 \leq j, i \leq L\text{-}1}, \tag{42}$$

$$M_{ii} = 1, 0 \leq i \leq L - 1, \tag{43}$$

$$M_{ji} = \sum_{p=0}^{P-1} \frac{s_p^*}{|s_p|^2} \left[ s_{p+\left\lfloor \frac{\tau_{ji}}{N} \right\rfloor} \sum_{n=pN}^{(p+1)N-1-\tau_{ji}+N\left\lfloor \frac{\tau_{ji}}{N} \right\rfloor} e_n^* e_{n+\tau_{ji}} \right.$$

$$\left. + s_{p+\left\lfloor \frac{\tau_{ji}}{N} \right\rfloor+1} \sum_{n=(P+1)N-\tau_{ji}+N\left\lfloor \frac{\tau_{ji}}{N} \right\rfloor}^{(p+1)N-1} e_n^* e_{n+\tau_{ji}} \right], \text{ si } \tau_j > \tau_i \tag{44}$$

et

$$M_{ji} = \sum_{p=0}^{P-1} \frac{s_p^*}{|s_p|^2} \left[ s_{p+\left\lfloor \frac{\tau_{ji}}{N} \right\rfloor+1} \sum_{n=pN-\tau_{ji}+N\left\lfloor \frac{\tau_{ji}}{N} \right\rfloor}^{(p+1)N-1} e_n^* e_{n+\tau_{ji}} \right.$$

$$\left. + s_{p+\left\lfloor \frac{\tau_{ji}}{N} \right\rfloor} \sum_{n=pN}^{pN-1-\tau_{ji}+N\left\lfloor \frac{\tau_{ji}}{N} \right\rfloor} e_n^* e_{n+\tau_{ji}} \right], \text{ si } \tau_j < \tau_i \tag{45}$$

p étant le nombre de symboles de la séquence pilote, **h** = $(\bar{h}_1, ..., h_L)^T$ étant les coefficients de canal parfaits (sans bruit), **n** étant l'estimation de bruit de canal qui est supposé avoir une variance égale à $N_0/E_{pilot}$ et $E_{pilot}$ étant l'énergie de symboles pilotes. L'estimation de canal MMSE se déduit de l'estimation de canal conventionnelle par la formule suivante :

$$\hat{h}^{MMSE} = L^H \hat{h} \tag{46}$$

dans laquelle

$$L = argmin \|\hat{h}^{MMSE} - h\|. \tag{47}$$

En utilisant l'équation (18), on peut en déduire :

$$\hat{h}^{MMSE} = M^H \left( MM^H + \frac{N_0}{E_{pilot}} I_L \right)^{-1} \hat{h} \tag{48}$$

dans laquelle $M^H$ est la matrice transposée conjuguée de la matrice M.
Une estimation par la méthode LS peut également être effectuée :

$$\hat{h}^{LS} = (M^H M)^{-1} M^H \hat{h}. \tag{49}$$

Toutefois, cette méthode d'estimation ne tient pas compte de la puissance de bruit et ainsi dégrade les performances en termes de rapport de signal sur bruit, par rapport à l'estimation MMSE. Comme cela apparaît sur la figure 6, les simulations montrent qu'une estimation de canal classique, basée seulement sur la corrélation avec des symboles pilotes donne de mauvaises performances avec un facteur d'étalement faible (courbe C7). La structure des interférences entre symboles doit être prise en compte, ce qui est possible grâce aux méthodes MMSE et LS. Les performances obtenues par la méthode MMSE sont illustrées par la courbe C9 de la figure 6 qui montre une sensible amélioration par rapport aux méthodes conventionnelles.

Selon une variante avantageuse de l'invention représentée sur la figure 4, le récepteur selon l'invention comporte une boucle itérative de détection permettant d'effectuer une réestimation de canal. Cette boucle comprend un entrelaceur 19 connecté en sortie du décodeur 15 et dont la sortie est reliée par l'intermédiaire d'un comparateur à seuil 20 à un dispositif 21 d'estimation itérative de canal. Le comparateur 20 permet de transformer la sortie pondérée ou souple du décodeur 15 en une sortie dite "dure", c'est-à-dire égale à 0 ou 1 selon que la valeur pondérée est supérieure ou non à un seuil prédéterminé.

Par ailleurs, le signal appliqué en entrée du récepteur Rake 11 est également appliqué au dispositif 21 d'estimation itérative de canal et à un dispositif d'estimation de canal 10 utilisé pour effectuer une première estimation de canal à l'aide de la séquence pilote, ces dispositifs fournissant des estimations de canal, par l'intermédiaire de commutateurs respectifs 23, 24 au dispositif de modélisation de canal 16 conçu pour déterminer un modèle équivalent de canal qui est appliqué en entrée du dispositif DDFSE 12.

Ce récepteur effectue un premier décodage sur la base des estimations de canal déterminées par le dispositif 10 à l'aide des symboles pilotes, et appliquées au dispositif 16 de modélisation de canal (commutateurs 23, 24 respectivement fermé et ouvert). Ensuite les codes estimés provenant du décodeur de canal 15 sont utilisés par le dispositif 21 pour ré-estimer le canal, ceci afin de réduire le bruit d'estimation de canal pour l'itération suivante, les estimations de canal ainsi déterminées étant appliquées au dispositif 16 de modélisation (commutateurs 23, 24 respectivement ouvert et fermé).

Bien entendu, le processus itératif d'estimation de canal représenté sur la figure 4 peut également être appliqué au système représenté sur la figure 2, c'est-à-dire, à un récepteur ne comportant pas la boucle itérative de détection représentée sur la figure 3.

Les courbes C8 et C10 sur la figure 6 illustrent les performances obtenues grâce à la solution représentée sur la figure 4 utilisant une méthode d'estimation de canal itérative, la courbe C8 correspondant au cas où l'on utilise un estimateur de canal conventionnel et la courbe C10 un estimateur de canal avec correction MMSE. Ces deux courbes montrent que cette méthode permet d'améliorer les performances, et dans le cas d'une estimation de canal avec correction MMSE, de se rapprocher sensiblement du cas idéal illustré par la courbe C6.

**Revendications**

**1.** Procédé de réception d'un signal, transmis sur un canal de transmission à trajets multiples, suivant une technique d'étalement de spectre avec un faible facteur d'étalement, ce signal étant transmis sous la forme de séquences de symboles binaires codés comportant des symboles pilotes prédéfinis et des symboles de données, multipliées par une séquence d'étalement, ce procédé comprenant une étape de détermination d'une estimation de canal à l'aide des symboles pilotes prédéfinis reçus,
**caractérisé en ce qu'**il comprend les étapes consistant à :

- reconstituer le signal transmis à l'aide de l'estimation de canal à partir des signaux reçus et transmis par les multiples trajets du canal de transmission,

- déterminer un modèle équivalent de canal tel qu'il est vu à partir du signal reconstitué, à partir de l'estimation de canal,
- réduire les interférences entre les symboles du signal transmis reconstitué, ces interférences résultant d'un facteur d'étalement faible, à l'aide d'un détecteur DDFSE à base de treillis à nombre d'états réduit et utilisant le modèle équivalent de canal, et délivrant en sortie des valeurs estimées des symboles codés reçus,
- désentrelacer les symboles codés, et
- décoder les valeurs estimées des symboles codés et désentrelacés, pour restituer les symboles de données transmis.

2. Procédé selon la revendication 1,
**caractérisé en ce que** les valeurs estimées des symboles codés reçus obtenues après réduction d'interférence et obtenues après décodage sont des valeurs pondérées ou souples.

3. Procédé selon la revendication 2,
**caractérisé en ce que** les étapes de réduction des interférences entre symboles et de décodage sont incluses dans un processus itératif dans lequel les symboles codés et désentrelacés obtenus à une itération n sont réestimés lors du décodage en fonction des symboles de données obtenus à l'issue du décodage et après correction d'erreurs, la différence entre les symboles codés réestimés obtenus à la même itération et les symboles codés, désentrelacés, obtenus à l'itération suivante n+1 est réentrelacée, puis appliquée en entrée du détecteur DDFSE et retranchée aux symboles codés obtenus à l'itération n+1 en sortie du détecteur DDFSE

4. Procédé selon l'une des revendications 1 à 3,
**caractérisé en ce que** l'estimation de canal est améliorée par la méthode des moindres carrés (LS)

5. Procédé selon la revendication 1 à 3,
**caractérisé en ce que** l'estimation de canal est améliorée par l'algorithme de l'erreur quadratique moyenne minimum (MMSE).

6. Procédé selon l'une des revendications 1 à 5,
**caractérisé en ce que** l'estimation de canal est effectuée dans un processus itératif dans lequel les symboles codés et désentrelacés obtenus à une itération n sont réestimés lors du décodage, en fonction des symboles de données obtenus à l'issue du décodage et après correction d'erreurs, les symboles codés réestimés étant entrelacés, une estimation de canal étant effectuée sur la base des symboles codés réestimés et entrelacés, un modèle équivalent de canal étant déterminé à partir de l'estimation de canal, l'estimation de canal et le modèle équivalent de canal déterminés à une itération n étant utilisés respectivement pour reconstituer le signal transmis et réduire les interférences entre symboles à l'itération suivante n+1.

7. Système adapté pour la réception d'un signal, transmis sur un canal de transmission à trajets multiples, suivant une technique d'étalement de spectre avec un faible facteur d'étalement, ce signal étant transmis sous la forme d'une séquence de symboles binaires codés comportant des symboles pilotes prédéfinis et des symboles de données, multipliée par une séquence d'étalement, ce système comprenant un récepteur en râteau (11) pour reconstituer le signal transmis à l'aide d'une estimation de canal, à partir des signaux reçus et transmis par les multiples trajets du canal de transmission, et des moyens (10) d'estimation de canal à partir des symboles pilotes reçus, pour délivrer une estimation du canal de transmission au récepteur en râteau (11),
**caractérisé en ce qu'**il comprend en outre :

- des moyens (16) de modélisation de canal pour déterminer un modèle équivalent de canal tel qu'il est vu en sortie du récepteur en râteau (11), en fonction de l'estimation de canal,
- des moyens (12) de réduction d'interférences entre symboles reçus, comportant un détecteur DDFSE à base de treillis à nombre d'états réduit, pour réduire les interférences entre symboles reçus à l'aide du modèle équivalent de canal, et restituer des valeurs estimées des symboles codés reçus,
- des moyens (14) de désentrelacement pour désentrelacer les valeurs estimées des symboles codés reçus, et
- des moyens (15) de décodage pour décoder les valeurs estimées et désentrelacées et fournir les symboles de données transmis.

8. Système selon la revendication 7,
**caractérisé en ce que** les valeurs estimées et décodées délivrées par les moyens (12) de réduction d'interférences entre symboles et les moyens de décodage (15) sont des valeurs pondérées ou souples.

**9.** Système selon la revendication 7 ou 8,
**caractérisé en ce qu'**il comprend en outre :

- des moyens (15) pour réestimer les symboles codés en fonction des symboles de données décodés et après correction d'erreurs,
- des premiers moyens de soustraction (18) pour soustraire aux symboles codés réestimés, les symboles codés estimés et désentrelacés, et obtenir une séquence de symboles codés réestimés extrinsèque,
- des premiers moyens d'entrelacement (17) pour entrelacer la séquence de symboles codés réestimés extrinsèque, et
- des seconds moyens de soustraction (13) pour soustraire de la séquence de symboles reçus et estimés par les moyens de réduction (11) à une itération suivante, la séquence de symboles codés réestimés extrinsèque.

**10.** Système selon l'une des revendications 7 à 9,
**caractérisé en ce qu'**il comprend en outre :

- des seconds moyens d'entrelacement (19) pour entrelacer la séquence de symboles codés réestimés en sortie des moyens de décodage (15),
- des second moyens d'estimation de canal (21) pour fournir une estimation de canal de transmission à partir de la séquence entrelacée de symboles codés réestimés, aux moyens (16) de détermination d'un modèle équivalent de canal et au récepteur en râteau (11).

**Patentansprüche**

**1.** Verfahren zum Empfang eines über einen Übertragungskanal mit mehreren Strecken gemäß einer Spektren-Spreiztechnik mit geringem Spreizfaktor übertragenen Signals, wobei dieses Signal in der Form von Sequenzen aus kodierten binären Zeichen übertragen wird, die vordefinierte Leitzeichen und Datenzeichen umfassen, die mit einer Spreizsequenz multipliziert sind, wobei dieses Verfahren einen Schritt zum Bestimmen einer Kanalabschätzung mit Hilfe der empfangenen vordefinierten Leitzeichen aufweist,
**dadurch gekennzeichnet, daß** es die Schritte umfaßt:

- Wiederherstellen des übertragenen Signals mit Hilfe der Kanalabschätzung ausgehend von über die mehreren Strecken des Übertragungskanals empfangenen und übertragenen Signalen,
- Bestimmen eines äquivalenten Kanalmodells, so wie es ausgehend von dem wiederhergestellten Signal gesehen wird, ausgehend von der Kanalabschätzung,
- Reduzieren der Interferenzen zwischen den Zeichen des übertragenen wiederhergestellten Signals, wobei diese Interferenzen aus einem geringen Spreizfaktor resultieren, mit Hilfe eines DDFSE-Detektors auf Trellis-Basis mit einer reduzierten Zahl von Zuständen und unter Verwendung des äquivalenten Kanalmodells, und wobei am Ausgang abgeschätzte Werte der empfangenen kodierten Zeichen ausgegeben werden,
- Entflechten der kodierten Zeichen und
- Dekodieren der abgeschätzten Werte der kodierten und entflochtenen Zeichen, um die übertragenen Datenzeichen zu rekonstruieren.

**2.** Verfahren nach Anspruch 1, **dadurch gekennzeichnet, daß** die abgeschätzten Werte der empfangenen kodierten Zeichen, die nach einer Interferenz-Reduktion und nach einer Dekodierung erhalten werden, gewichtete oder flexible Werte sind.

**3.** Verfahren nach Anspruch 2, **dadurch gekennzeichnet, daß** die Schritte zur Reduzierung der Interferenzen zwischen den Zeichen und zur Dekodierung in einem iterativen Prozeß enthalten sind, bei dem die kodierten und entflochtenen Zeichen, die bei einer Iteration n erhalten werden, bei einer Dekodierung in Abhängigkeit von den Datenzeichen wiederabgeschätzt werden, die am Ausgang der Dekodierung und nach einer Fehlerkorrektur erhalten werden, wobei die Differenz zwischen den wiederabgeschätzten kodierten Zeichen, die bei derselben Iteration erhalten werden, und den entflochtenen kodierten Zeichen, die bei der darauffolgenden Iteration n + 1 erhalten werden, wieder verflochten wird, dann an den Eingang des DDFSE-Detektors angelegt wird und von den bei der Iteration n + 1 erhaltenen kodierten Zeichen am Ausgang des DDFSE-Detektors abgezogen wird.

**4.** Verfahren nach einem der Ansprüche 1 bis 3, **dadurch gekennzeichnet, daß** die Kanalabschätzung mit Hilfe des Verfahrens der kleinsten Fehlerquadrate (LS) verbessert wird.

**5.** Verfahren nach Anspruch 1 bis 3, **dadurch gekennzeichnet, daß** die Kanalabschätzung mit Hilfe des Algorithmus des kleinsten mittleren Fehlerquadrats verbessert wird.

**6.** Verfahren nach einem der Ansprüche 1 bis 5, **dadurch gekennzeichnet, daß** die Kanalabschätzung in einem iterativen Prozeß ausgeführt wird, bei dem die kodierten und entflochtenen Zeichen, die bei einer Iteration n erhalten werden, bei der Dekodierung in Abhängigkeit von Datenzeichen, die am Ausgang der Dekodierung und nach einer Fehlerkorrektur erhalten werden, wieder abgeschätzt werden, wobei die wiederabgeschätzten Zeichen verflochten werden, eine Kanalabschätzung auf der Grundlage wiederabgeschätzter und verflochtener kodierter Zeichen ausgeführt wird, ein äquivalentes Kanalmodell ausgehend von der Abschätzung des Kanals festgelegt wird, die Kanalabschätzung und das äquivalente Kanalmodell, die bei einer Iteration n festgelegt werden, entsprechend dazu verwendet werden, bei der darauffolgenden Iteration n + 1 das übertragene Signal wiederherzustellen und die Interferenzen zwischen Zeichen zu reduzieren.

**7.** System zum Empfang eines Signals, das über einen Übertragungskanal mit mehreren Strecken gemäß einer Spektren-Spreiztechnik mit geringem Spreizfaktor übertragen wird, wobei dieses Signal in der Form einer Sequenz aus binären kodierten Zeichen übertragen wird, die vordefinierte Leitzeichen und Datenzeichen umfaßt, die mit einer Spreizsequenz multipliziert ist, wobei das System einen Rake-Empfänger (11), um das übertragene Signal ausgehend von über die mehreren Strecken des Übertragungskanals empfangenen und übertragenen Signalen mit Hilfe einer Kanalabschätzung wiederherzustellen, und Mittel (10) zur Kanalabschätzung ausgehend von empfangenen Leitzeichen umfaßt, um eine Abschätzung des Übertragungskanals zum Rake-Empfänger (11) zu liefern, **dadurch gekennzeichnet, daß** es umfaßt:

- Mittel (16) zur Kanalmodellierung, um ein äquivalentes Kanalmodell festzulegen, wie es am Ausgang des Rake-Empfängers (11) gesehen wird, in Abhängigkeit von der Kanalabschätzung,
- Mittel (12) zur Reduktion von Interferenzen zwischen empfangenen Zeichen, die einen DDFSE-Detektor auf Trellis-Basis mit einer reduzierten Zahl von Zuständen umfassen, um die Interferenzen zwischen empfangenen Zeichen mit Hilfe eines äquivalenten Kanalmodells zu reduzieren, und zum Rekonstruieren der abgeschätzten Werte der empfangenen kodierten Zeichen,
- Mittel (14) zur Entflechtung, um die abgeschätzten Werte der empfangenen kodierten Zeichen zu entflechten und
- Mittel (15) zur Dekodierung, um die abgeschätzten und entflochtenen Werte zu dekodieren und die übertragenen Datenzeichen zu liefern.

**8.** System nach Anspruch 7, **dadurch gekennzeichnet, daß** die durch die Mittel (12) zur Reduktion von Interferenzen zwischen Zeichen und die Dekodierungsmittel (15) gelieferten abgeschätzten und dekodierten Werte gewichtete oder flexible Werte sind.

**9.** System nach Anspruch 7 oder 8, **dadurch gekennzeichnet, daß** es umfaßt:

- Mittel (15) zum Wiederabschätzen der kodierten Zeichen in Abhängigkeit von dekodierten Datenzeichen und nach einer Fehlerkorrektur,
- erste Subtraktionsmittel (18), um von den wiederabgeschätzten kodierten Zeichen die abgeschätzten und entflochtenen kodierten Zeichen abzuziehen und eine extrinsische Sequenz wiederabgeschätzter kodierter Zeichen zu erhalten,
- erste Verflechtungsmittel (17), um die extrinsische Sequenz wiederabgeschätzter kodierter Zeichen zu verflechten und
- zweite Subtraktionsmittel (13), um die extrinsische Sequenz wiederabgeschätzter kodierter Zeichen von der Sequenz der empfangenen und durch die Mittel (12) zur Reduktion bei einer folgenden Iteration abgeschätzten Zeichen abzuziehen.

**10.** System nach einem der Ansprüche 7 bis 9, **dadurch gekennzeichnet, daß** es umfaßt:

- zweite Verflechtungsmittel (19), um die Sequenz wiederabgeschätzter kodierter Zeichen am Ausgang der Dekodiermittel (15) zu verflechten,
- zweite Kanalabschälzungsmittel (21), um eine Abschätzung für einen Übertragungskanal ausgehend von der verflochtenen Sequenz wiederabgeschätzter kodierter Zeichen zu Mitteln (16) zur Bestimmung eines äquivalenten Kanalmodells und zum Rake-Empfänger (11) zu liefern.

**Claims**

1. Method of receiving a signal, transmitted over a multiple-path transmission channel, using a spread spectrum technique with a low spread factor, this signal being transmitted in the form of sequences of coded binary symbols comprising predefined pilot symbols and data symbols, multiplied by a spreading sequence, this method comprising a step of determining a channel estimation by means of the predefined pilot symbols received, **characterised in that** it comprises the steps consisting of:

   - reconstituting the transmitted signal by means of the channel estimation using the signals received and transmitted by the multiple paths of the transmission channel,

   - determining an equivalent channel model as seen from the reconstituted signal, from the channel estimation,

   - reducing the interference between the symbols of the reconstituted transmitted signal, this interference resulting from a low spread factor, using a trellis-based DDFSE detector with a small number of states and using the equivalent channel model, and delivering as an output estimated values of the coded symbols received,

   - deinterleaving the coded symbols, and

   - decoding the estimated values of the coded and deinterleaved symbols, in order to restore the transmitted data symbols.

2. Method according to Claim 1, **characterised in that** the estimated values of the coded symbols received obtained after reduction of interference and obtained after decoding are weighted or flexible values.

3. Method according to Claim 2, **characterised in that** the steps of reducing interference between symbols and of decoding are included in an iterative process in which the coded and deinterleaved symbols obtained at an iteration n are re-estimated at the time of decoding according to the data symbols obtained at the end of decoding and after error correction, the difference between the re-estimated coded symbols obtained at the same iteration and the coded deinterleaved symbols obtained at the following iteration n+1 is reinterleaved, and then applied as an input to the DDFSE detector and deducted from the coded symbols obtained at iteration n+1 at the output from the DDFSE detector.

4. Method according to one of Claims 1 to 3, **characterised in that** the channel estimation is improved by the least squares method (LS).

5. Method according to Claims 1 to 3, **characterised in that** the channel estimation is improved by the minimum mean square error algorithm (MMSE).

6. Method according to one of Claims 1 to 5, **characterised in that** the channel estimation is effected in an iterative process in which the coded and deinterleaved symbols obtained at an iteration n are re-estimated at the time of decoding, according to the data symbols obtained at the end of decoding and after error correction, the re-estimated coded symbols being interleaved, a channel estimation being performed on the basis of the re-estimated and interleaved coded symbols, an equivalent channel model being determined from the channel estimation, the channel estimation and the equivalent channel model determined at an iteration n being used respectively in order to reconstitute the transmitted signal and to reduce the interference between symbols at the following iteration n+1.

7. System for receiving a signal, transmitted over a multiple-path transmission channel, using a spread spectrum technique with a low spread factor, this signal being transmitted in the form of a sequence of coded binary symbols comprising predefined pilot symbols and data symbols, multiplied by a spreading sequence, this system comprising a rake receiver (11) for reconstituting the signal transmitted using a channel estimation, from signals received and transmitted by the multiple paths of the transmission channel, and channel estimation means (10) using pilot symbols received, in order to deliver a transmission channel estimation to the rake receiver (11), **characterised in that** it also comprises:

   - channel modelling means (16) for determining an equivalent channel model as seen at the output of the rake receiver (11), according to the channel estimation,

- means (12) of reducing interference between received signals, comprising a trellis-based DDFSE detector with a reduced number of states, in order to reduce interference between symbols received by means of the equivalent channel model, and to restore estimated values of the coded symbols received,

- deinterleaving means (14) for deinterleaving the estimated values of the coded symbols received, and

- decoding means (15) for decoding the estimated and deinterleaved values and supplying the transmitted data symbols.

8. System according to Claim 7, **characterised in that** the estimated and decoded values delivered by the means (12) of reducing interference between symbols and the decoding means (15) are weighted or flexible values.

9. System according to Claim 7 or 8, **characterised in that** it also comprises:

- means (15) for re-estimating the coded symbols according to the decoded data symbols and after error correction,

- first subtraction means (18) for subtracting from the re-estimated coded symbols the estimated and deinterleaved coded symbols, and obtaining an extrinsic sequence of re-estimated coded symbols,

- first interleaving means (17) for interleaving the extrinsic sequence of re-estimated coded symbols, and

- second subtraction means (13) for subtracting, from the sequence of symbols received and estimated by the reduction means (11) at a following iteration, the extrinsic sequence of re-estimated coded symbols.

10. System according to one of Claims 7 to 9, **characterised in that** it also comprises:

- second interleaving means (19) for interleaving the sequence of re-estimated coded symbols at the output of the decoding means (15),

- second channel estimation means (21) for supplying a transmission channel estimation from the interleaved sequence of re-estimated coded symbols, to the equivalent channel model determination means (16) and to the rake receiver (11).

Fig. 1

Fig. 2

Fig. 3

Fig. 7

Fig. 4

Fig. 5

Fig. 6